(19) Europäisches Patentamt
European Patent Office
Office européen des brevets

(11) **EP 3 631 562 B1**

(12) **EUROPÄISCHE PATENTSCHRIFT**

(45) Veröffentlichungstag und Bekanntmachung des Hinweises auf die Patenterteilung:
**04.09.2024 Patentblatt 2024/36**

(21) Anmeldenummer: **18727290.1**

(22) Anmeldetag: **25.05.2018**

(51) Internationale Patentklassifikation (IPC):
**G06F 1/16** *(2006.01)* **G06F 3/01** *(2006.01)*
**G02B 27/01** *(2006.01)*

(52) Gemeinsame Patentklassifikation (CPC):
**G02B 27/0101; G02B 27/017; G06F 1/163; G06F 3/011;** G02B 2027/0123; G02B 2027/0178

(86) Internationale Anmeldenummer:
**PCT/EP2018/063803**

(87) Internationale Veröffentlichungsnummer:
**WO 2018/219816 (06.12.2018 Gazette 2018/49)**

(54) **ABBILDUNGSVORRICHTUNG, DATENBRILLE UND VERFAHREN ZUM GENERIEREN EINES BILDES AUS EINEM AUSGANGSBILD IN EINER DATENBRILLE**

IMAGING DEVICE, HEAD-MOUNTED DISPLAY, AND METHOD FOR GENERATING AN IMAGE FROM AN ORIGINAL IMAGE IN A HEAD-MOUNTED DISPLAY

DISPOSITIF DE REPRODUCTION, LUNETTES INTELLIGENTES ET PROCÉDÉ SERVANT À GÉNÉRER UNE IMAGE À PARTIR D'UNE IMAGE DE DÉPART DANS DES LUNETTES INTELLIGENTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.05.2017 DE 102017111607**

(43) Veröffentlichungstag der Anmeldung:
**08.04.2020 Patentblatt 2020/15**

(73) Patentinhaber: **Tooz Technologies GmbH 73430 Aalen (DE)**

(72) Erfinder:
• **RUDOLPH, Günter**
  **07743 Jena (DE)**
• **DOBSCHAL, Hans-Jürgen**
  **99510 Kleinromstedt (DE)**
• **HILLENBRAND, Matthias**
  **07745 Jena (DE)**

(74) Vertreter: **PATERIS Patentanwälte PartmbB Danckelmannstraße 9 14059 Berlin (DE)**

(56) Entgegenhaltungen:
WO-A1-2012/004089    DE-A1- 102012 205 164
US-A1- 2001 033 401    US-A1- 2008 316 606

**Beschreibung**

Die vorliegende Erfindung betrifft eine Abbildungsvorrichtung sowie eine Datenbrille und ein Verfahren zum Generieren eines Bildes aus einem Ausgangsbild in einer Datenbrille.

Ein Beispiel für eine Datenbrille ist in DE 10 2013 223 963 A1 beschrieben. In dieser Datenbrille wird das Bild eines Bildgebers über einen prismatischen Ansatz in ein Brillenglas eingekoppelt, von dem es zu einer im Brillenglas angeordneten Auskopplungsstruktur geleitet wird, welche den Abbildungsstrahlengang in Richtung auf das Auge eines die Datenbrille tragenden Nutzers auskoppelt. Dabei kann der prismatische Ansatz mit dem Brillenglas ein einstückig ausgebildetes Teil bilden, beispielsweise indem es mit dem Brillenglas zusammen hergestellt wird, oder das Brillenglas und der prismatische Ansatz werden getrennt hergestellt und anschließend miteinander verkittet. Der prismatische Ansatz kann aber auch separat im Brillengestell der Datenbrille angeordnet sein.

Die Abbildung und optische Korrekturen der Abbildung erfolgen dabei Hauptsächlich durch Freiformflächen des prismatischen Ansatzes, deren Größe - und damit die Größe des prismatischen Ansatzes - im Wesentlichen von der geforderten Größe der Eyebox und den gewünschten Feldwinkeln abhängen. Unter der Eyebox ist dabei derjenige dreidimensionale Bereich der Lichtröhre im Abbildungsstrahlengang, in dem sich die Augenpupille bewegen kann, ohne dass eine Vignettierung des Bildes erfolgt, zu verstehen. Da bei einer Datenbrille der Abstand des Auges in Bezug auf die Datenbrille im Wesentlichen konstant ist, kann die eigentlich dreidimensionale Eyebox auf eine zweidimensionale Eyebox, die lediglich die Drehbewegungen des Auges berücksichtigt, reduziert werden. In diesem Fall entspricht die Eyebox im Wesentlichen der Austrittspupille der Datenbrille am Ort der Eintrittspupille des Auges. Letztere ist in der Regel durch die Augenpupille gegeben.

Eine große Eyebox geht dabei in der Regel mit großen Abmessungen des prismatischen Ansatzes einher, da bei einer großen Eyebox für die geforderte optische Abbildungsqualität große abbildende Flächen, das heißt große Reflexionsflächen und große Refraktionsflächen nötig sind.

Aus DE 10 2013 207 257 A1 ist eine Anzeigevorrichtung bekannt, die als Datenbrille ausgebildet sein kann und in der ein großes Gesichtsfeld mit einem großen Sehwinkel bereitgestellt wird. Dies geschieht, indem die das Bild anzeigende Bildgebereinheit mehrere Abschnitte aufweist, die jeweils nur einen örtlichen Teilbereich des abzubildenden Bildes erzeugen. Außerdem ist in einer der Bildgebereinheit nachgeordneten Abbildungsoptik jedem Abschnitt der Bildgebereinheit ein separater Abbildungskanal zugeordnet, in dem jeweils ein Abbildungselement der Abbildungsoptik angeordnet ist. Die Abbildung über die Abbildungskanäle erfolgt dabei so, dass die virtuellen Teilbilder zusammen ein virtuelles Bild formen, welches ein Benutzer wahrnehmen kann. Auf diese Weise können die Linsendurchmesser der in der Abbildungsoptik aus DE 10 2013 207 257 A1 verwendeten Linsen verringert werden.

Die WO 2021/004089 A1 beschreibt die Herstellung eines Brillenglases für ein optisches Display.

Die DE 10 2012 205 164 A1 beschreibt ein Projektionsdisplay und ein Verfahren zum Projizieren eines Gesamtbildes. Dabei stellt ein Bildgeber Teilbilder in einer zweidimensionalen Verteilung dar. Eine Projektionsoptikanordnung ist dazu konfiguriert, die Teilbilder zu einem Gesamtbild zusammenzusetzen.

Die US 2008/0316606 A1 beschreibt ein Bildbetrachtungsgerät, in dem ein Gesamtbild aus Teilbildern mit unterschiedlichen Gesichtsfeldern zusammengesetzt wird.

Die US 2001/0033401 A1 zeigt eine Displayvorrichtung, die als Brille ausgebildet sein kann. Diese Displayvorrichtung weist zwei Bilddarstellungselemente auf, die an der Unterseite und der Oberseite des Brillenglases angeordnet sind. Jedes dieser Bilddarstellungselemente stellt einen anderen Bildausschnitt dar. Über ein prismatisch ausgeformtes Element wird der von der jeweiligen Displayvorrichtung ausgehende Strahleng in das Brillenglas eingekoppelt. Über eine reflektive Fläche wird der Strahlengang dann in Richtung auf das Auge gelenkt.

Es ist eine Aufgabe der vorliegenden Erfindung, für eine gegebene Eyebox und für gegebene Feldwinkel eine Abbildungsvorrichtung für eine Datenbrille zur Verfügung zu stellen, die kompakt ausgebildet werden kann und eine gleichmäßige Helligkeitsverteilung im vom Nutzer wahrgenommenen virtuellen Bild vorhanden ist. Darüber hinaus ist es eine Aufgabe der vorliegenden Erfindung, eine bei gegebener Eyebox und gegebenen Feldwinkeln kompakte Datenbrille zur Verfügung zu stellen, mit der eine gleichmäßige Helligkeitsverteilung im vom Nutzer wahrgenommenen virtuellen Bild vorhanden sein kann. Schließlich ist es eine Aufgabe der vorliegenden Erfindung ein Verfahren zum Generieren eines Bildes aus einem Ausgangsbild in einer Datenbrille zur Verfügung zu stellen, das es ermöglicht bei einer gegebenen Eyebox und gegebenen Feldwinkeln eine kompakte Ausgestaltung der Abbildungsvorrichtung der Datenbrille zu realisieren, wobei eine gleichmäßige Helligkeitsverteilung im vom Nutzer wahrgenommenen virtuellen Bild vorhanden sein kann.

Die genannten Aufgaben werden durch eine Abbildungsvorrichtung nach Anspruch 1, durch eine Datenbrille nach Anspruch 8 und durch ein Verfahren zum Generieren eines Bildes nach Anspruch 9 gelöst. Die abhängigen Ansprüche enthalten vorteilhafte Ausgestaltungen der Erfindung.

Eine erfindungsgemäße Abbildungsvorrichtung für eine Datenbrille generiert ein Bild aus einem Ausgangsbild, welches in wenigstens zwei Ausgangs-Teilbilder aufgeteilt ist. Die Abbildungsvorrichtung umfasst:

- eine Bildgeberelementanordnung mit einer Anzahl von Bildgeberelementen, auf denen eine entsprechende Anzahl von Ausgangs-Teilbildern dargestellt wird,
- eine der Anzahl von Bildgeberelementen entsprechende Anzahl von Abbildungskanälen, die jeweils wenigstens eine bildformende Reflektionsfläche und/oder wenigstens eine bildformende Refraktionsfläche umfassen, wobei jeder der Abbildungskanäle einem der Bildgeberelemente zugeordnet ist und eines der Ausgangs-Teilbilder überträgt, und
- ein allen Abbildungskanälen gemeinsames Brillenglas, über das die Abbildungskanäle in Richtung auf ein Betrachterauge gelenkt werden.

In der erfindungsgemäßen Abbildungsvorrichtung sind die bildformenden Reflektionsflächen und/oder Refraktionsflächen der Abbildungskanäle Flächen eines an dem Brillenglas angeordneten Prismas.

Durch die Ausgestaltung der bildformenden Reflexions- und/oder Refraktionsflächen als Flächen eines an dem Brillenglas angeordneten Prismas können die Reflexionsflächen und/oder Refraktionsflächen für eine gegebene Eyebox und gegebene Feldwinkel besonders kompakt ausgestaltet werden. Durch die mehreren Abbildungskanäle werden verschiedene Ausgangs-Teilbilder des Ausgangsbildes in verschiedene Bereiche der Eyebox abgebildet, so dass mittels aller Ausgangs-Teilbilder die Eyebox komplett gefüllt wird. Aufgrund der durch die Aufteilung reduzierten Öffnungswinkel der durch die einzelnen Abbildungskanäle übertragenen Strahlenbündel können die Krümmungsradien der bildformenden Reflexionsflächen und/oder Refraktionsflächen im Vergleich zu einem Strahlenbündel mit einem großen Öffnungswinkel, wie es bei der gegebenen Eyebox und den gegebenen Feldwinkeln im Falle der Übertragung des gesamten Bildes durch einen einzigen Abbildungskanal der Fall wäre, reduziert werden. Durch die im Vergleich zur Übertragung des Abbildungsstrahlengangs über einen einzigen Abbildungskanal verringerten Krümmungsradien sind die entsprechenden Flächen leichter mit hoher optischer Qualität herzustellen.

Die Ausgangs-Teilbilder wenigstens zweier Bildgeberelemente stellen Bildausschnitte des Ausgangsbildes mit teilweise überlappenden Bildbereichen dar, wobei die überlappenden Bildbereichen über wenigstens zwei verschiedene Abbildungskanäle übertragen werden. Auf diese Weise kann die Anzahl an Bildgeberelementen relativ gering gehalten werden. Am Rande der Bildgeberelementanordnung gelegene Bildgeberelemente weisen dabei eine kleinere Bildgeberfläche auf als weiter im Zentrum der Bildgeberelementanordnung gelegene Bildgeberelemente. Dabei stellen am Rand der Bildgeberelementanordnung gelegene Bildgeberelemente kleinere Bildausschnitte des Ausgangsbildes dar als weiter im Zentrum der Bildgeberelementanordnung gelegene Bildgeberelemente. Auf diese Weise kann erreicht werden, dass trotz des Überlapps der Bildbereiche von auf unterschiedlichen Bildgeberelementen dargestellten Bildausschnitten eine gleichmäßige Helligkeitsverteilung im vom Nutzer wahrgenommenen virtuellen Bild vorhanden ist. Dabei kann insbesondere ein zentrales Bildgeberelement vorhanden sein, das als Bildausschnitt das gesamte Ausgangsbild darstellt.

In einer ersten Ausgestaltung der erfindungsgemäßen Abbildungsvorrichtung ist die Bildgeberelementanordnung durch eine Anzahl separater Bildgeber gebildet, wobei jeder der separaten Bildgeber ein Bildgeberelement der Bildgeberelementanordnung bildet. In einer alternativen Ausgestaltung ist die Bildgeberelementanordnung dagegen durch einen einzigen Bildgeber gebildet, wobei die Bildgeberelemente Bildgeberbereiche des Bildgebers sind, auf denen jeweils ein anderes der Ausgangs-Teilbilder dargestellt wird.

In der erfindungsgemäßen Abbildungsvorrichtung kann das das Prisma eine der Bildgeberelementanordnung zugewandte Prismaeingangsfläche und eine einer Brillenglaseingangsfläche des Brillenglases zugewandte Prismaausgangsfläche umfassen, wobei die Abbildungskanäle über die Prismaausgangsfläche aus dem Prisma ausgekoppelt und über die Brillenglaseingangsfläche in das Brillenglas eingekoppelt werden. Dabei ist es vorteilhaft, wenn jeder Abbildungskanal einen Abschnitt der Prismaeingangsfläche und einen Abschnitt der Prismaausgangsfläche als bildformende Refraktionsflächen umfasst und für jeden Abbildungskanal eine sich zwischen seinem Abschnitt der Prismaeingangsfläche und seinem Abschnitt der Prismaausgangsfläche gelegene bildformende Reflektionsfläche vorhanden ist. Zudem kann jeder Abbildungskanal auch einen Abschnitt der Brillengalseingangsfläche als bildformende Refraktionsfläche umfassen

Eine erfindungsgemäße Datenbrille umfasst wenigstens eine erfindungsgemäße Abbildungsvorrichtung. Wenn mit der Datenbrille für beide Augen eines Betrachters je ein virtuelles Bild generiert werden soll, kann die Datenbrille auch zwei erfindungsgemäße Abbildungsvorrichtungen - je eine für jedes Auge - umfassen.

Erfindungsgemäß wird außerdem ein Verfahren zum Generieren eines Bildes aus einem Ausgangsbild in einer eine erfindungsgemäße Abbildungsvorrichtung umfassenden Datenbrille zur Verfügung gestellt. In dem erfindungsgemäßen Verfahren wird ein Ausgangsbild in eine Anzahl von Ausgangs-Teilbilder aufgeteilt. Zum Generieren des virtuellen Bildes wird dann jedes der Ausgangs-Teilbilder über einen eigenen im Prisma gebildeten Abbildungskanal übertragen. Wenigstens zwei Ausgangs-Teilbilder stellen dabei Bildausschnitte des Ausgangsbildes mit überlappenden Bildbereichen dar, so dass die überlappenden Bildbereiche der Bildausschnitte über wenigstens zwei verschiedene Abbildungskanäle übertragen werden. Dabei stellen am Rand des Ausgangsbildes gelegene Ausgangs-Teilbilder kleinere Bildausschnitte des Ausgangsbildes dar als weiter im Zentrum des Ausgangsbildes gelegene Ausgangs-Teilbilder. Ein zentrales Ausgangs-Teilbild kann insbesondere als Bildausschnitt das gesamte Ausgangsbild darstellen.

Die mit dem erfindungsgemäßen Verfahren erzielbaren Vorteile wurden bereits mit Bezug auf die erfindungsgemäße Abbildungsvorrichtung beschrieben. Auf diesen Teil der Beschreibung wird daher verwiesen.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Figuren.

Figur 1     zeigt die wesentlichen Flächen einer Datenbrille, bei der der Abbildungsstrahlengang über Reflexion an der Brillenglasinnenfläche und der Brillenglasaußenfläche zu einem Auskoppelelement geleitet wird, von dem der Strahlengang in Richtung auf das Auge eines die Datenbrille tragenden Nutzers ausgekoppelt wird.

Figur 2     zeigt in einer stark schematisierten Darstellung die Datenbrille aus Figur 1 und die die Eyebox definierende Lichtröhre.

Figur 3     zeigt eine weitere Vereinfachung der Darstellung der Datenbrille aus Figur 2.

Figur 4     zeigt eine Darstellung der Datenbrille aus Figur 3 mit einer verkleinerten bildformenden Fläche.

Figur 5     zeigt eine erfindungsgemäße Abbildungsvorrichtung für eine Datenbrille in einer stark schematisierten Darstellung.

Figur 6     zeigt die Abbildungsvorrichtung aus Figur 5 zusammen mit dem Strahlengang für eine Pupillenposition im Zentrum der Eyebox.

Figur 7     zeigt die Abbildungsvorrichtung aus Figur 5 zusammen mit einem Strahlengang für eine Pupillenposition am Rand der Eyebox.

Figur 8     zeigt eine Darstellung zur Erläuterung der Übertragung verschiedener Bildausschnitte eines Ausgangsbildes bei Verwendung gleich großer Bildgeberelemente.

Figur 9     zeigt die Übertragung verschiedener Bildausschnitte eines Ausgangsbildes bei Verwendung von Bildgeberelementen unterschiedlicher Größe.

Figur 10     zeigt in einer schematischen Darstellung die relevanten Flächen einer erfindungsgemäßen Abbildungsvorrichtung für eine Datenbrille.

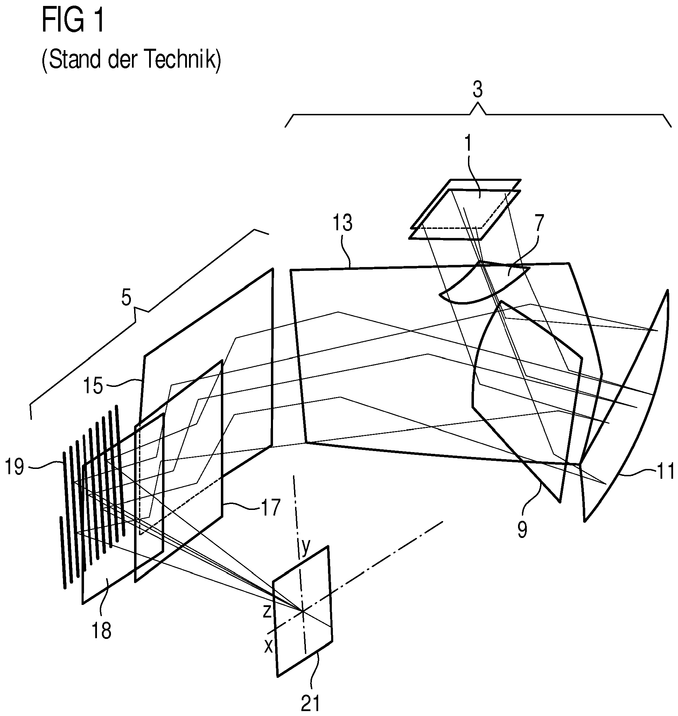

Figur 1 zeigt die für die Abbildung, Lichtleitung sowie die Ein- und Auskopplung des Abbildungsstrahlengangs relevanten Flächen einer Abbildungsoptik für eine Datenbrille nach Stand der Technik. Der besseren Übersichtlichkeit wegen sind die Körperkanten des Brillenglases und des prismatischen Teils der Abbildungsvorrichtung weggelassen. Außerdem sind die Hauptstrahlen des Abbildungsstrahlengangs für die Eckpunkte und das Zentrum des Bildgebers dargestellt.

Die in Figur 1 dargestellte Abbildungsvorrichtung umfasst einen Bildgeber 1, auf dem ein Ausgangsbild dargestellt wird, auf dessen Basis mit Hilfe der Abbildungsvorrichtung ein virtuelles Bild generiert werden soll, das von einem Träger der Datenbrille als vor seinen Augen im Raum schwebend wahrgenommen werden kann. Die Abbildungsvorrichtung umfasst ein Prisma 3 und ein Brillenglas 5. Ausgehend vom Bildgeber tritt der Abbildungsstrahlengang, der in der Figur durch die von den Eckpunkten und dem Zentrum des Bildgebers 1 ausgehenden Hauptstrahlen repräsentiert ist, über eine Prismaeingangsfläche 7 in das Prisma 3 ein. Im Inneren des Prismas 3 wird er über drei Reflexionsflächen 9, 11 und 13 in Richtung auf die Außenfläche 15 des Brillenglases 5 reflektiert. Unter mehrfacher Reflexion der Hauptstrahlen zwischen der Brillenglasaußenfläche 15 und der Brillenglasinnenfläche 17 wird der Strahlengang schließlich zu einem Auskoppelelement 19 des Brillenglases 5 geleitet, von wo er durch einen Abschnitt 18 der Brillenglasinnenfläche hindurch in Richtung auf das Auge des die Datenbrille tragenden Nutzers ausgekoppelt wird. Das Auge ist in Fig. 1 nicht dargestellt. Allerdings ist die Eyebox 21 dargestellt, welche denjenigen Bereich repräsentiert, in dem sich die Augenpupille bewegen kann, ohne dass eine Vignettierung des Bildes wahrgenommen wird.

In der in Figur 1 dargestellten Abbildungsvorrichtung nach Stand der Technik sind die Prismaeingangsfläche 7 sowie die Reflexionsflächen 9, 11 und 13 des Prismas als Freiformflächen ausgebildet, die zur Bildformung des virtuellen Bildes beitragen. Im Folgenden werden diese daher als bildformende Flächen bezeichnet.

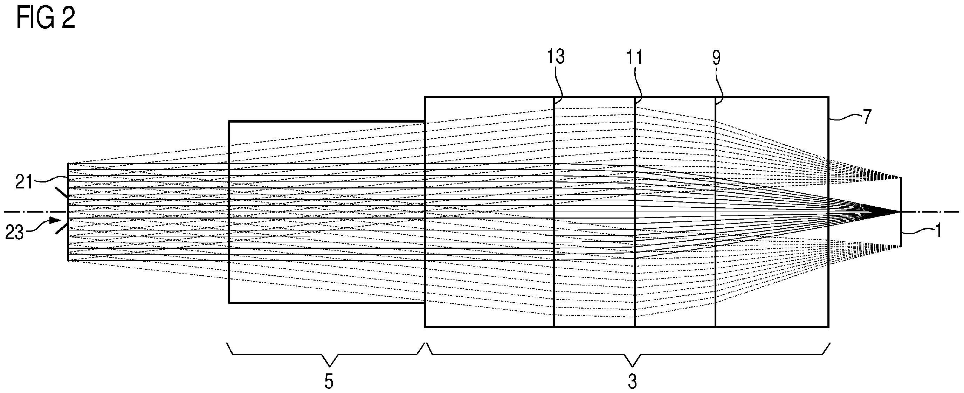

Zur besseren Veranschaulichung ist die Abbildungsvorrichtung aus Figur 1 in Figur 2 aufgefaltet und mit Paraxiallinsen anstelle der Freiformflächen dargestellt. In Figur 2 ist zudem die Augenpupille 23 angedeutet. Die optischen Anforderungen an die Freiformflächen des Prismas 3 entsprechen in etwa den optischen Anforderungen an die Linsenflächen eines leistungsfähigen Okulars. Die Darstellung aus Figur 2 verdeutlicht, dass eine erhebliche Baulänge des Prismas nötig ist, um eine qualitativ hochwertige Abbildung in der gesamten Eyebox 21 zu erreichen.

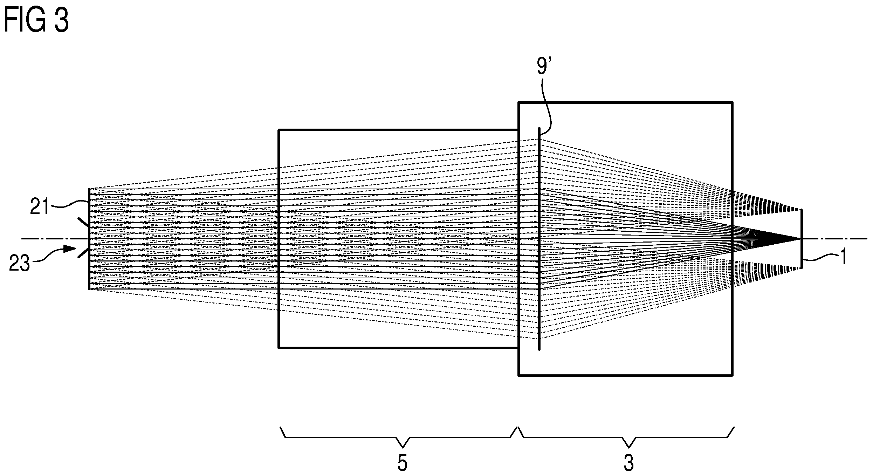

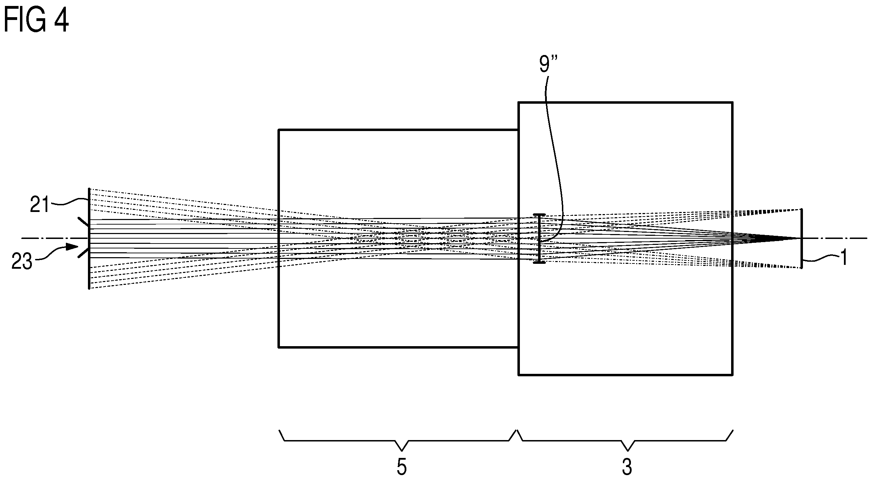

Zwar wäre es theoretisch möglich, die optische Wirkung der Freiformflächen 7 bis 13 mit einer einzigen Fläche 9' (siehe Figur 3) zu erreichen und so die Baulänge des Prismas 3 zu verringern, jedoch wäre dann die von dieser Fläche 9' herbeizuführende Strahlablenkung deutlich größer als die von den einzelnen Flächen 7 bis 13 herbeizuführenden Strahlablenkungen. Dies würde zu erheblich höheren Anforderungen an die Fläche 9' als an die Flächen 7 bis 13 führen, was den Herstellungsaufwand sehr stark erhöht und dadurch die praktische Umsetzung dieser Lösung verhindert. Für eine praktische Umsetzung müssten die Anforderungen an die optische Qualität der Fläche 9' verringert werden, was lediglich dadurch erreicht werden könnte, dass das Öffnungsverhältnis der abbildenden Fläche 9' deutlich reduziert wird. Da sich bei vorausgesetzten Abbildungsverhältnissen im Hinblick auf die Eyebox, die Feldwinkel, die Brennweite und die Korrektur der Abbildung die Brennweite der Linse 9' nicht ändern darf, bleibt nämlich nur die Möglichkeit, ihren freien Querschnitt zu reduzieren, wie dies in Figur 4 dargestellt ist. Bei einer Reduzierung des freien Durchmessers der bildformenden Fläche (in Figur 4 nun bildformende Fläche 9") würde jedoch die Eyebox 21 nicht mehr vollständig gefüllt, so dass Bildinhalte verlorengehen würden. Wie aus Figur 4 ersichtlich ist, würde ein Beobachter, dessen Augenpupille 23 sich in Zentrum der Eyebox 21 befindet, nur den zentralen Teil des auf dem Bildgeber 1 dargestellten Ausgangsbildes erkennen. Um auch die Ränder des Ausgangsbildes erkennen zu können, müsste der Beobachter seine Augenpupille 23 zum Rand der Eyebox 21 verlagern.

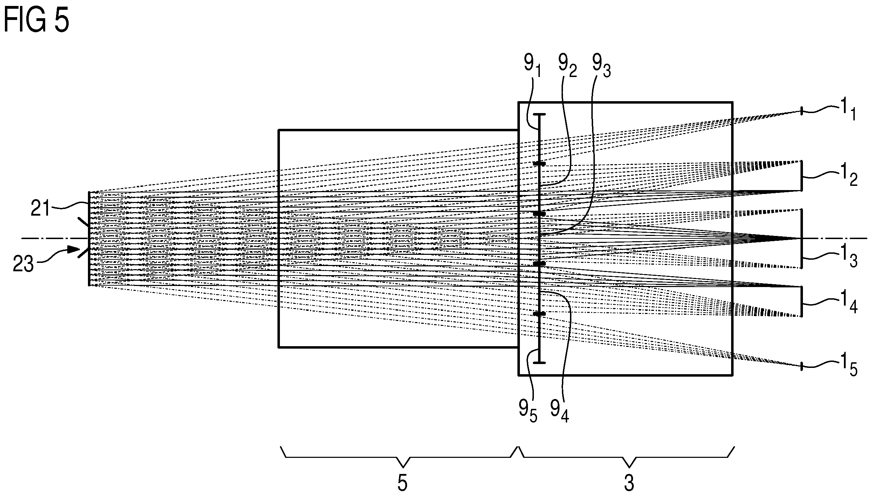

Um das nicht vollständige Ausfüllen der Eyebox zu vermeiden, werden im Rahmen der vorliegenden Erfindung mehrere bildformende Einzelflächen $9_1$ bis $9_5$ über den Querschnitt der bildformenden Fläche 9' aus Figur 3 verteilt. Außerdem wird der Bildgeber 1 in mehrere Bildgeberelemente $1_1$ bis $1_5$ aufgeteilt. Diese Bildgeberelemente $1_1$ bis $1_5$ stellen Bildausschnitte des Ausgangsbildes mit teilweise überlappenden Bildbereichen dar. Die Bildgeberelemente $1_1$ bis $1_5$ können dabei wie in Figur 5 dargestellt eine Anzahl separater Bildgeber $1_1$ bis $1_5$ sein, die zusammen eine Bildgeberelementanordnung bilden. Es besteht aber auch die Möglichkeit, als Bildgeberelementanordnung einen einzigen Bildgeber vorzusehen, der so groß ist wie die Bildgeberelementanordnung aus Figur 5 und der Bildgeberbereiche aufweist, welche den Bildgeberelementen $1_1$ bis $1_5$ aus Figur 5 entsprechen und auf denen jeweils ein anderes Ausgangs-Teilbild dargestellt ist. Auch eine Kombination dieser beiden Ausführungsvarianten ist möglich. Diese Bildgeberbereiche können dabei durch Bildgeberbereiche, auf denen keine Ausgangs-Teilbilder dargestellt werden, getrennt sein. Die Bildgeberbereiche, auf denen keine Ausgangs-Teilbilder dargestellt werden, entsprechen dann den Bereichen zwischen den separaten Bildgebern $1_1$ bis $1_5$ aus Figur 5.

Wenn die Bildgeberelementanordnung aus einer Anzahl von separaten Bildgeberelementen $1_1$ bis $1_5$ besteht, können diese wie in Figur 5 dargestellt entweder in einer gemeinsamen Ebene angeordnet sein oder, falls es beispielsweise die Anforderungen an den Bauraum nicht zulassen, die Bildgeberelemente $1_1$ bis $1_5$ alle in einer Ebene anzuordnen, in unterschiedlichen Ebenen angeordnet sein. Im letzteren Fall können dann Umlenkelemente vorhanden sein, mit denen die von den einzelnen Bildgeberelementen $1_1$ bis $1_5$ ausgehenden Strahlengänge zueinander ausgerichtet werden.

In der in Figur 5 dargestellten Abbildungsvorrichtung sind so viele bildformende Flächen $9_1$ bis $9_5$ vorhanden, wie Bildgeberelemente $1_1$ bis $1_5$ vorhanden sind. Die von den einzelnen Bildgebern $1_1$ bis $1_5$ dargestellten Ausgangs-Teilbilder werden dann über getrennte Abbildungskanäle abgebildet. So wird das auf dem Bildgeberelement $1_1$ dargestellte Ausgangs-Teilbild von der bildformenden Fläche $9_1$ abgebildet, das auf dem Bildgeberelement $1_2$ dargestellte Ausgangs-Teilbild von der bildformenden Fläche $9_2$, das von dem Bildgeberelement $1_3$ dargestellte Ausgangs-Teilbild von der bildformenden Fläche $9_3$ und so weiter. Mit anderen Worten, jedes Ausgangs-Teilbild wird über einen anderen Abbildungskanal übertragen. Dies ermöglicht es, die gesamte Eyebox auszufüllen, wobei die Anforderungen an die Flächen $9_1$ bis $9_5$ jeweils erheblich geringer sind als die Anforderungen, die an eine Fläche 9', wie sie in Figur 3 dargestellt ist, zu stellen wären.

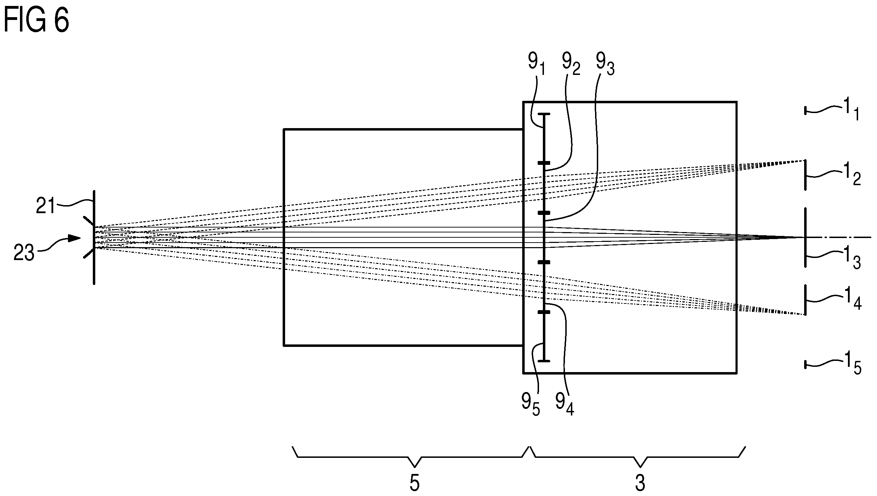

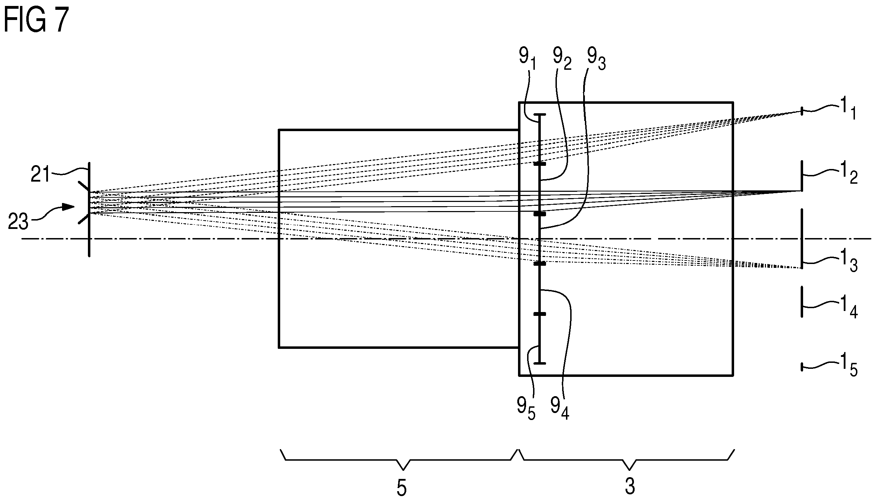

Bei der in Figur 5 dargestellten Abbildungsvorrichtung werden die zur Abbildung beitragenden Strahlenbündel je nach Position der Augenpupille 23 in der Eyebox 21 durch unterschiedliche Abbildungskanäle übertragen. Dies ist in den Figuren 6 und 7 dargestellt, wobei Figur 6 eine Augenpupille 23 im Zentrum der Eyebox sowie die zugehörigen Übertragungskanäle und Figur 7 eine Augenpupille 23 am Rand der Eyebox 21 sowie die zugehörigen Übertragungskanäle zeigt.

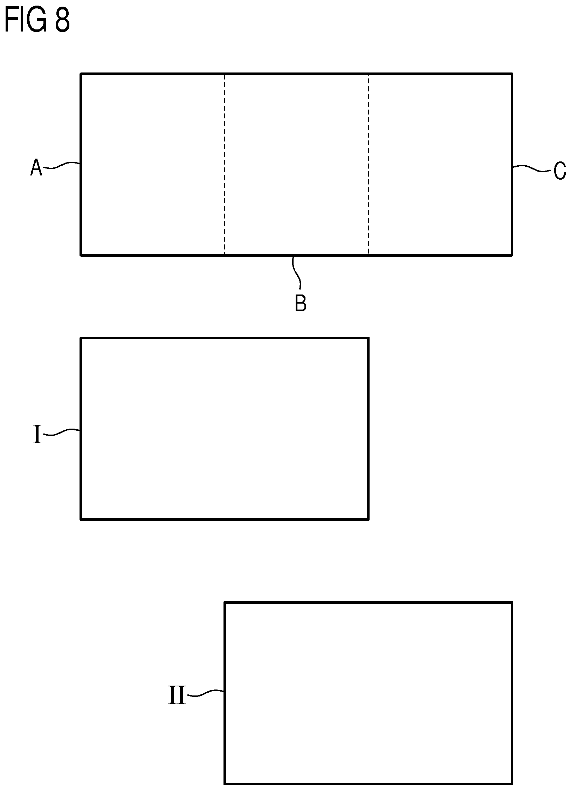

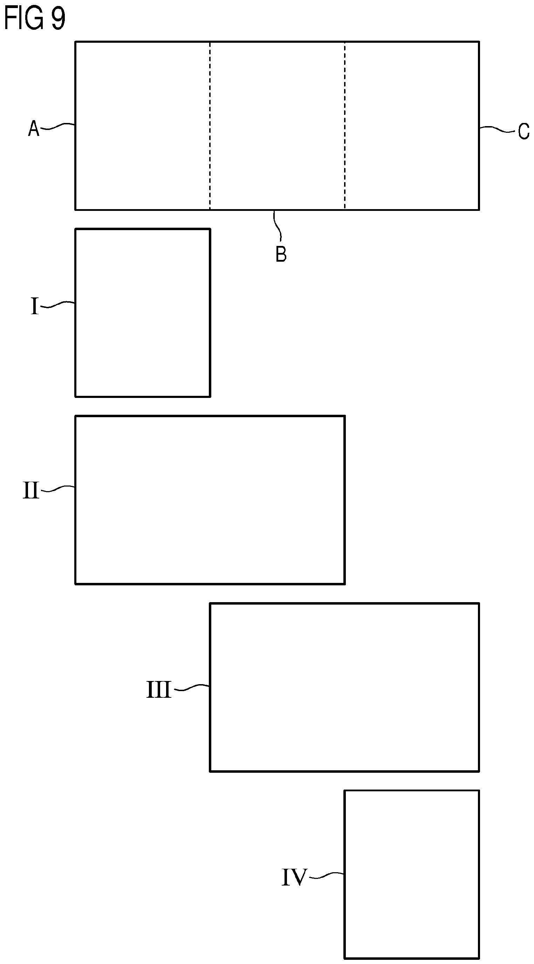

Wie den Figuren 5 und bis 7 zu entnehmen ist, weisen am Rand der Bildgeberelementanordnung gelegene Bildgeberelemente $1_1$, $1_5$ kleinere Bildgeberflächen auf als im Zentrum der Bildgeberelementanordnung gelegene Bildgeberelemente wie etwa das Bildgeberelement $1_3$. Die Bildgeberflächen der Bildgeberelemente $1_1$ bis $1_5$ nehmen dabei von der Mitte der Bildgeberelementanordnung zu deren Rand hin ab. Dadurch kann erreicht werden, dass das über mehrere Abbildungskanäle übertragene Bild in der gesamten Eyebox 21 dieselbe Bildhelligkeit aufweist. Dies soll nachfolgend anhand von Figur 8 näher erläutert werden. Figur 8 zeigt ein Ausgangsbild, das mehrere Bildbereiche A, B und C zeigt. Die Bildbereiche A; B und C sind im Ausgangsbild disjunkt. Wenn nun von zwei gleich großen Bildgeberelementen I, II jeweils ein Ausgangs-Teilbild mit einem die Bildbereiche A, B zeigenden Bildausschnitt (Bildgeberelement I) und einem die Bildbereiche B, C zeigenden Bildausschnitt (Bildgeberelement II) dargestellt und über zwei zugeordnete Abbildungskanäle übertragen werden, wird der Bildausschnitt B sowohl über den dem Bildgeberelement I zugeordneten Abbildungskanal als auch über den dem Bildgeberelement II zugeordneten Abbildungskanal übertragen. Die Bildbereiche A und C werden dagegen lediglich von dem dem Bildgeberelement I zugeordneten Abbildungskanal bzw. von dem dem Bildgeberelement II zugeordneten Abbildungskanal übertragen. Dies hat zur Folge, dass der zentrale Bildbereich B von einem Nutzer der Datenbrille heller wahrgenommen wird als die am Rand gelegenen Bildbereiche A und C. Um dies zu vermeiden, nehmen in der erfindungsgemäßen Abbildungsvorrichtung die Bildgeberflächen der Bildgeberelemente $1_1$ bis $1_5$ zum Rand der Bildgeberelementanordnung hin ab. Wie in Figur 9 gezeigt ist, kann dadurch erreicht werden, dass alle Bildausschnitte A, B, C über gleich viele Abbildungskanäle übertragen werden, nämlich der Bildausschnitt A über die den Bildgeberelementen I und II zugeordneten Abbildungskanäle, der Bildausschnitt B über die den Bildgeberelementen II und III zugeordneten Abbildungskanäle und der Bildausschnitt C über die in Bildgeberelementen III und IV zugeordneten Abbildungskanäle. Jeder Bildausschnitt wird somit über zwei Abbildungskanäle übertragen, so dass jeder Bildausschnitt vom Nutzer der die Abbildungsvorrichtung enthaltenden Datenbrille gleich hell wahrgenommen wird.

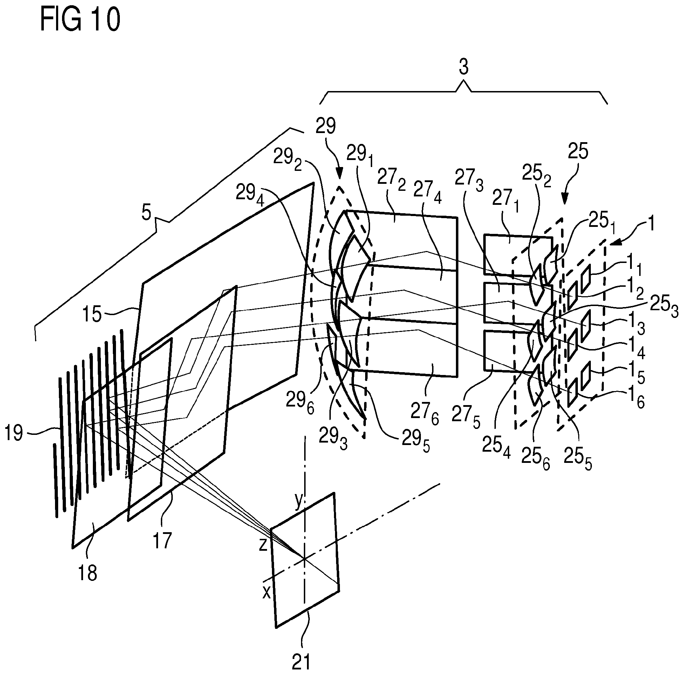

Obwohl in den Figuren 5 bis 7 die Abbildungskanäle jeweils nur eine bildformende Fläche $9_1$ bis $9_5$ aufweisen, werden aus praktischen Gründen typischerweise mehrere bildformende Flächen pro Abbildungskanal vorhanden sein. Ein Ausführungsbeispiel für ein Prisma 3, wie es für eine Abbildungsvorrichtung einer Datenbrille Verwendung finden kann, ist in Figur 10 gezeigt. In diesem Ausführungsbeispiel weist der Bildgeber 1 sechs Bildgeberelemente $1_1$ bis $1_6$ auf, auf denen Ausgangs-Teilbilder mit teilweise überlappenden Bildbereichen des Ausgangsbildes dargestellt werden. Das Prisma weist eine Prismaeingangsfläche 25 auf, die den einzelnen Bildgeberelementen $1_1$ bis $1_6$ zugeordnete Teilflächen $25_1$ bis $25_6$ aufweist, die als bildformende Refraktionsflächen dienen. Weiterhin sind den einzelnen Bildgeberelementen $1_1$ bis $1_6$ Reflexionsflächen $27_1$ bis $27_6$ im Prisma 3 zugeordnet, die als bildformende Reflexionsflächen dienen. Über eine Prismaausgangsfläche 29, die den einzelnen Bildgeberelementen $1_1$ bis $1_6$ zugeordnete Teilflächen $29_1$ bis $29_6$ aufweist, welche jeweils als bildformende Refraktionsfläche dienen, erfolgt die Auskopplung aus dem Prisma 3 bzw. die Einkopplung in eine Brillenglaseingangsfläche des Brillenglases 5. Die den jeweiligen Bildgeberelementen $1_1$ bis $1_6$ zugeordneten refraktiven und reflektiven Flächen bilden jeweils einen Abbildungskanal, der dem entsprechenden Bildgeberelement zugeordnet ist.

Im Brillenglas 5 ist dann im vorliegenden Ausführungsbeispiel lediglich ein einziger Abbildungskanal für alle Bildgeberelemente $1_1$ bis $1_6$ vorhanden, der im Wesentlichen dem Abbildungskanal entspricht, wie er mit Bezug auf Fig. 1 beschrieben worden ist.

Um möglichst viel Spielraum bei der Korrektur der Abbildung zu haben, sind die bildformenden Flächen $25_1$ bis $25_6$, $27_1$ bis $27_6$ und $29_1$ bis $29_6$ als Freiformflächen ausgebildet, die der nachfolgenden Gleichung genügen:

$$z = \frac{c \cdot r^2}{1 + \sqrt{1 - (1+k) \cdot c^2 \cdot r^2}} + \sum_{i=1}^{N} A_i(x, y) \quad \text{mit} \quad r^2 = x^2 + y^2$$

Hierbei steht c für die Krümmung und k für die Konizität einer Fläche. Mit $A_i$ werden die Koeffizienten der Freiformfläche bezeichnet, mit x und y die Flächenkoordinate in einem kartesischen Koordinatensystem. Je Kanal gibt es in dem in Figur 10 gezeigten Ausführungsbeispiel zwei refraktive Flächen $25_1$ bis $25_6$ und 29-1 bis 29-6 sowie eine reflektive Fläche $27_1$ bis $27_6$. Die Eintritts- und Austrittsflächen 25 und 29 des Prismas 3 liegen jeweils nahe beieinander, so dass die sechs Abbildungskanäle als Spritzgussteil in einem Stück gefertigt werden können. Die Bildgeberanordnung 1 kann wie bereits erwähnt aus einer Anzahl von Bildgeberelementen $1_1$ bis $1_6$ oder einem großen Bildgeber, bei dem die Ausgangs-Teilbilder auf unterschiedlichen Bildgeberbereichen abgebildet werden, bestehen.

Die vorliegende Erfindung wurde zu Erläuterungszwecken anhand von Ausführungsbeispielen im Detail beschrieben. Ein Fachmann erkennt jedoch, dass er im Rahmen der vorliegenden Erfindung von den beschriebenen Ausführungsbeispielen abweichen kann. Zum Beispiel kann er eine andere Anzahl von Bildgeberelementen und Abbildungskanälen vorsehen oder eine andere Anzahl von bildformenden Flächen pro Abbildungskanal. Die vorliegende Erfindung soll daher nicht auf die Ausführungsbeispiele beschränkt sein, sondern lediglich durch die beigefügten Ansprüche.

**Patentansprüche**

1.   Abbildungsvorrichtung für eine Datenbrille zum Generieren eines virtuellen Bildes aus einem Ausgangsbild, welches in wenigstens zwei Ausgangs-Teilbilder aufgeteilt ist, wobei die Abbildungsvorrichtung umfasst:

- eine Bildgeberelementanordnung (1) mit einer Anzahl von Bildgeberelementen ($1_1$ bis $1_6$), auf denen eine entsprechende Anzahl von Ausgangs-Teilbildern dargestellt wird,

- eine der Anzahl von Bildgeberelementen ($1_1$ bis $1_6$) entsprechende Anzahl von Abbildungskanälen, die jeweils wenigstens eine bildformende Reflektionsfläche ($27_1$ bis $27_6$) und/oder wenigstens eine bildformende Refraktionsfläche ($25_1$ bis $25_6$, $29_1$ bis $29_6$) umfassen, wobei jeder der Abbildungskanäle einem der Bildgeberelemente ($1_1$ bis $1_6$) zugeordnet ist und eines der Ausgangs-Teilbilder überträgt, und

- ein allen Abbildungskanälen gemeinsames Brillenglas (5), über das die Abbildungskanäle in Richtung auf ein Betrachterauge gelenkt werden,

wobei

- die bildformenden Reflektionsflächen ($27_1$ bis $27_6$) und/oder Refraktionsflächen ($25_1$ bis $25_6$, $29_1$ bis $29_6$) der Abbildungskanäle Flächen eines an dem Brillenglas (5) angeordneten Prismas (3) sind,

- die Ausgangs-Teilbilder wenigstens zweier Bildgeberelemente ($1_1$ bis $1_6$) Bildausschnitte des Ausgangsbildes mit teilweise überlappenden Bildbereichen darstellen, wobei die überlappenden Bildbereiche über wenigstens zwei verschiedene Abbildungskanäle übertragen werden, und

- am Rand der Bildgeberelementanordnung (1) gelegene Bildgeberelemente ($1_1$, $1_5$) eine kleinere Bildgeberfläche aufweisen und kleinere Bildausschnitte des Ausgangsbildes darstellen als weiter im Zentrum der Bildgeberelementanordnung (1) gelegene Bildgeberelemente ($1_3$).

2. Abbildungsvorrichtung nach Anspruch 1, **dadurch gekennzeichnet, dass** ein zentrales Bildgeberelement (1s) vorhanden ist, das als Bildausschnitt das gesamte Ausgangsbild darstellt.

3. Abbildungsvorrichtung nach Anspruch 1 oder Anspruch 2, **dadurch gekennzeichnet, dass** die Bildgeberelementanordnung (1) durch eine Anzahl separater Bildgeber ($1_1$ bis $1_6$) gebildet ist, wobei jeder der separaten Bildgeber ($1_1$ bis $1_6$) ein Bildgeberelement der Bildgeberelementanordnung (1) bildet.

4. Abbildungsvorrichtung nach Anspruch 1 oder Anspruch 2, **dadurch gekennzeichnet, dass** die Bildgeberelementanordnung (1) durch einen einzigen Bildgeber gebildet ist und die Bildgeberelemente Bildgeberbereiche des Bildgebers sind, auf denen jeweils ein anderes der Ausgangs-Teilbilder dargestellt wird.

5. Abbildungsvorrichtung nach einem der Ansprüche 1 bis 4, **dadurch gekennzeichnet, dass**

- das Prisma (3) eine der Bildgeberelementanordnung zugewandte Prismaeingangsfläche (25) und eine einer Brillengalseingangsfläche des Brillenglases zugewandte Prismaausgangsfläche (29) umfasst und

- die Abbildungskanäle über die Prismaausgangsfläche (29) aus dem Prisma ausgekoppelt und über die Brillengalseingangsfläche in das Brillenglas (5) eingekoppelt werden.

6. Abbildungsvorrichtung nach Anspruch 5, **dadurch gekennzeichnet, dass** jeder Abbildungskanal einen Abschnitt ($25_1$ bis $25_6$) der Prismaeingangsfläche (25) und einen Abschnitt ($29_1$ bis $29_6$) der Prismaausgangsfläche (29) als bildformende Refraktionsflächen umfasst und für jeden Abbildungskanal eine sich zwischen seinem Abschnitt ($25_1$ bis $25_6$) der Prismaeingangsfläche (25) und seinem Abschnitt ($29_1$ bis $29_6$) der Prismaausgangsfläche (29) gelegene bildformende Reflektionsfläche ($27_1$ bis $27_6$) vorhanden ist.

7. Abbildungsvorrichtung nach Anspruch 6, **dadurch gekennzeichnet, dass** jeder Abbildungskanal außerdem einen Abschnitt der Brillengalseingangsfläche als bildformende Refraktionsfläche umfasst.

8. Datenbrille mit einer Abbildungsvorrichtung nach einem der Ansprüche 1 bis 7.

9. Verfahren zum Generieren eines Bildes aus einem Ausgangsbild in einer Datenbrille, welche eine Abbildungsvorrichtung nach einem der Ansprüche 1 bis 7 umfasst, wobei

- das Ausgangsbild in eine Anzahl von Ausgangs-Teilbildern aufgeteilt wird und zum Generieren des virtuellen Bildes jedes der Ausgangs-Teilbilder über einen eigenen im Prisma (3) gebildeten Abbildungskanal übertragen wird,

- wenigstens zwei Ausgangs-Teilbilder Bildausschnitte des Ausgangsbildes mit überlappenden Bildbereichen darstellen, so dass die überlappenden Bildbereiche der Bildausschnitte über wenigstens zwei verschiedene Abbildungskanäle übertragen werden, und

- am Rand des Ausgangsbildes gelegene Ausgangs-Teilbilder kleinere Bildausschnitte des Ausgangsbildes darstellen als weiter im Zentrum des Ausgangsbildes gelegene Ausgangs-Teilbilder.

10. Verfahren nach Anspruch 9, **dadurch gekennzeichnet, dass** ein zentrales Ausgangs-Teilbild als Bildausschnitt das gesamte Ausgangsbild darstellt.

**Claims**

1. Imaging apparatus for smartglasses for generating a virtual image from an original image, which is divided into at least two original partial images, wherein the imaging apparatus comprises:

   - an image generator element arrangement (1) having a number of image generator elements ($1_1$ to $1_6$), on which a corresponding number of original partial images is represented,
   - a number of imaging channels comprising in each case at least one image-forming reflection surface ($27_1$ to $27_6$) and/or at least one image-forming refraction surface ($25_1$ to $25_6$, $29_1$ to $29_6$), said number corresponding to the number of image generator elements ($1_1$ to $1_6$), wherein each of the imaging channels is associated with one of the image generator elements ($1_1$ to $1_6$) and transmits one of the original partial images, and
   - a spectacle lens (5), which is common to all imaging channels and via which the imaging channels are directed in the direction of an observer's eye,
   wherein
   - the image-forming reflection surfaces ($27_1$ to $27_6$) and/or refraction surfaces ($25_1$ to $25_6$, $29_1$ to $29_6$) of the imaging channels are surfaces of a prism (3) that is arranged on the spectacle lens (5),
   - the original partial images of at least two image generator elements ($1_1$ to $1_6$) represent image sections of the original image with partially overlapping image regions, wherein the overlapping image regions are transmitted via at least two different imaging channels, and
   - image generator elements ($1_1$, $1_5$) located at the periphery of the image generator element arrangement (1) have a smaller image generator surface and represent smaller image sections of the original image than image generator elements ($1_3$) that are located further in the center of the image generator element arrangement (1).

2. Imaging apparatus according to Claim 1, **characterized in that** a central image generator element ($1_5$) is present, which represents the entire original image as an image section.

3. Imaging apparatus according to Claim 1 or Claim 2, **characterized in that** the image generator element arrangement (1) is formed by a number of separate image generators ($1_1$ to $1_6$), wherein each of the separate image generators ($1_1$ to $1_6$) forms an image generator element of the image generator element arrangement (1).

4. Imaging apparatus according to Claim 1 or Claim 2, **characterized in that** the image generator element arrangement (1) is formed by a single image generator, and the image generator elements are image generator regions of the image generator on which in each case a different one of the original partial images is represented.

5. Imaging apparatus according to one of Claims 1 to 4, **characterized in that**

   - the prism (3) comprises a prism entrance surface (25), facing the image generator element arrangement, and a prism exit surface (29), facing a spectacle lens entrance surface of the spectacle lens, and
   - the imaging channels are coupled out of the prism via the prism exit surface (29) and are coupled into the spectacle lens (5) via the spectacle lens entrance surface.

6. Imaging apparatus according to Claim 5, **characterized in that** each imaging channel comprises a portion ($25_1$ to $25_6$) of the prism entrance surface (25) and a portion ($29_1$ to $29_6$) of the prism exit surface (29) as image-forming refraction surfaces and an image-forming reflection surface ($27_1$ to $27_6$), which is located between its portion ($25_1$ to $25_6$) of the prism entrance surface (25) and its portion ($29_1$ to $29_6$) of the prism exit surface (29), is present for each imaging channel.

7. Imaging apparatus according to Claim 6, **characterized in that** each imaging channel additionally comprises a portion of the spectacle lens entrance surface as an image-forming refraction surface.

8. Smartglasses having an imaging apparatus according to one of Claims 1 to 7.

9. Method for generating an image from an original image in smartglasses comprising an imaging apparatus according to one of Claims 1 to 7, wherein

- the original image is divided into a number of original partial images and each of the original partial images is transmitted via a separate imaging channel formed in the prism (3) to generate the virtual image,
- at least two original partial images represent image sections of the original image with overlapping image regions, such that the overlapping image regions of the image sections are transmitted via at least two different imaging channels, and
- original partial images that are located at the periphery of the original image represent smaller image sections of the original image than original partial images that are located further in the center of the original image.

**10.** Method according to Claim 9, **characterized in that** a central original partial image represents the entire original image as an image section.

**Revendications**

**1.** Dispositif de reproduction pour des lunettes intelligentes permettant de générer une image virtuelle à partir d'une image de départ qui est divisée en au moins deux images partielles de départ, le dispositif de reproduction comprenant :

- un ensemble d'éléments de générateur d'image (1) pourvu d'un nombre donné d'éléments de générateur d'image ($1_1$ à $1_6$) sur lesquels un nombre correspondant d'images partielles de départ est représenté,
- un nombre de canaux de reproduction correspondant au nombre d'éléments de générateur d'image ($1_1$ à $1_6$) et qui comprennent respectivement au moins une surface de flexion de formation d'image ($27_1$ à $27_6$) et/ou au moins une surface de réfraction de formation d'image ($25_1$ à $25_6$, $29_1$ à $29_6$), chacun des canaux de reproduction étant associé à l'un des éléments de générateur d'image ($1_1$ à $1_6$) et transmettant l'une des images partielles de départ, et
- un verre de lunettes (5) commun à tous les canaux de reproduction par lequel les canaux de reproduction sont dirigés en direction de l'œil d'un observateur, dans lequel
- les surfaces de réflexion de formation d'image ($27_1$ à $27_6$) et/ou les surfaces de réfraction ($25_1$ à $25_6$, $29_1$ à $29_6$) des canaux de reproduction sont des surfaces d'un prisme (3) disposé au niveau du verre de lunettes (5),
- les images partielles de départ d'au moins deux éléments de générateur d'image ($1_1$ à $1_6$) représentent des sections d'image de l'image de départ avec des zones d'image qui se chevauchent partiellement, dans lequel les zones d'image qui se chevauchent sont transmises par au moins deux canaux de reproduction différents, et
- des éléments de générateur d'image ($1_1$, $1_5$) situés au bord de l'ensemble d'éléments de générateur d'image (1) présentent une surface de générateur d'image inférieure et représentent des sections d'image de l'image de départ plus petites que les éléments de générateur d'image ($1_3$) situés plus près du centre de l'ensemble d'éléments de générateur d'image (1).

**2.** Dispositif de reproduction selon la revendication 1, **caractérisé en ce qu'**il existe un élément de générateur d'image central ($1_5$) qui représente l'image de départ entière en tant que section d'image.

**3.** Dispositif de reproduction selon la revendication 1 ou la revendication 2, **caractérisé en ce que** l'ensemble d'éléments de générateur d'image (1) est formé par un nombre donné de générateurs d'image ($1_1$ à $1_6$), chacun des générateurs d'image ($1_1$ à $1_6$) séparés formant un élément de générateur d'image de l'ensemble d'éléments de générateur d'image (1).

**4.** Dispositif de reproduction selon la revendication 1 ou la revendication 2, **caractérisé en ce que** l'ensemble d'éléments de générateur d'image (1) est formé par un seul générateur d'image, et les éléments de générateur d'image sont des zones de générateurs d'image du générateur d'image sur lesquelles respectivement une autre des images partielles de départ est représentée.

**5.** Dispositif de reproduction selon l'une quelconque des revendications 1 à 4, **caractérisé en ce que**

- le prisme (3) comprend une surface d'entrée de prisme (25) tournée vers l'ensemble d'éléments de générateur d'image et une surface de sortie de prisme (29) tournée vers une surface d'entrée de verre de lunettes du verre de lunettes, et
- les canaux de reproduction sont extraits du prisme par l'intermédiaire de la surface de sortie de prisme (29) et sont injectés dans le verre de lunettes (5) par l'intermédiaire de la surface d'entrée de verre de lunettes.

**6.** Dispositif de reproduction selon la revendication 5, **caractérisé en ce que** chaque canal de reproduction comprend une partie ($25_1$ à $25_6$) de la surface d'entrée de prisme (25) et une partie ($29_1$ à $29_6$) de la surface de sortie de prisme (29) en tant que surfaces de réfraction de formation d'image et **en ce qu'**il existe pour chaque canal de reproduction une surface de réflexion de formation d'image ($27_1$ à $27_6$) située entre sa partie ($25_1$ à $25_6$) de la surface d'entrée de prisme (25) et sa partie ($29_1$ à $29_6$) de la surface de sortie de prisme (29).

**7.** Dispositif de reproduction selon la revendication 6, **caractérisé en ce que** chaque canal de reproduction comprend en outre une partie de la surface d'entrée de verre de lunettes en tant que surface de réfraction de formation d'image.

**8.** Lunettes intelligentes, comprenant un dispositif de reproduction selon l'une quelconque des revendications 1 à 7.

**9.** Procédé permettant de générer une image à partir d'une image de départ dans des lunettes intelligentes comprenant un dispositif de reproduction selon l'une quelconque des revendications 1 à 7, dans lequel

    - l'image de départ est divisée en un nombre donné d'images de départ partielles, et chacune des images partielles de départ est transmise par son propre canal de reproduction formé dans le prisme (3) pour générer l'image virtuelle,
    - au moins deux images partielles de départ représentent des sections d'image de l'image de départ avec des zones d'image qui se chevauchent de sorte que les zones d'image qui se chevauchent des sections d'image sont transmises par au moins deux canaux de reproduction différents, et
    - des images partielles de départ situées au bord de l'image de départ représentent des sections d'image de l'image de départ plus petites que des images partielles de départ situées plus près du centre de l'image de départ.

**10.** Procédé selon la revendication 9, **caractérisé en ce qu'**une image de départ partielle représente l'image de départ entière en tant que section d'image.

FIG 1
(Stand der Technik)

FIG 2

FIG 3

FIG 4

FIG 5

FIG 6

EP 3 631 562 B1

FIG 7

FIG 8

A ⌒                          ⌒ C

B

I ⌒

II ⌒

FIG 9

FIG 10

**IN DER BESCHREIBUNG AUFGEFÜHRTE DOKUMENTE**

**In der Beschreibung aufgeführte Patentdokumente**

- DE 102013223963 A1
- DE 102013207257 A1
- WO 2021004089 A1
- DE 102012205164 A1
- US 20080316606 A1
- US 20010033401 A1